# FASCICULE DE BREVET EUROPEEN

(11) **EP 4 213 325 B1**
(45) Date de publication et mention de la délivrance du brevet: **13.05.2026**
(21) Numéro de dépôt: 22213515.4
(22) Date de dépôt: 14.12.2022
(51) Int. Cl.: H02G 15/18, H02G 1/14, H02G 15/064, H02G 15/184, H01R 4/70

(54) **PROCÉDÉ DE FABRICATION D'UNE JONCTION DE CÂBLE ÉLECTRIQUE, JONCTION ET CÂBLE ASSOCIÉS**
VERFAHREN ZUR HERSTELLUNG EINER ELEKTRISCHEN KABELVERBINDUNG, VERBINDUNG UND KABEL DAFÜR
METHOD FOR MANUFACTURING AN ELECTRICAL CABLE JUNCTION, ASSOCIATED JUNCTION AND CABLE

(30) Priorité: 12.01.2022 FR 2200206
(43) Date de publication de la demande: 19.07.2023
(73) Titulaire: Nexans, 92400 Courbevoie (FR)
(72) Inventeur: CARPENTIER, Ludovic, 08200 Floing (FR); DEBIEVRE, Pascal, 08430 Jandun (FR); DURMOIS, Lionel, 08300 Lucquy (FR); RIVALLAND, Yann, 08090 Montcy-Notre-Dame (FR); DE BUYST, Jo, 9340 Lede (BE)
(74) Mandataire: Cabinet Boettcher

(56) Documents cités:
- EP-A1- 0 435 569
- EP-A1- 3 764 492
- WO-A1-02/078145
- WO-A1-2020/208440
- WO-A1-97/32381
- FR-A1- 2 790 863

## Description

La présente invention se rapporte à un procédé de fabrication d'une jonction de câble électrique de puissance, ainsi qu'à une jonction de câble électrique de puissance et à un câble électrique de puissance associés.

L'invention appartient au domaine des jonctions de câbles électriques. Elle trouve en particulier à s'appliquer aux jonctions de câbles électriques de puissance, par exemple à moyenne et haute tension (entre environ 1 kV et environ 72 kV), comportant un ou plusieurs types de mastics, de résine ou encore de gel, qui présentent des propriétés électriques et qui sont disposés en une ou plusieurs couches. Ces substances fluides aux propriétés électriques ont par exemple une valeur de rigidité diélectrique (en anglais « dielectric strength ») supérieure à 10 kV/mm.

Les jonctions actuelles comportant des électrodes intégrées sont généralement obtenues par moulage. Les divers composants de la jonction sont donc enrobés les uns avec les autres et la structure de la jonction est figée. Elle ne convient donc qu'à une tension donnée et à une plage de valeurs donnée de la section des câbles destinataires. Il est par conséquent nécessaire de fabriquer une multiplicité de jonctions selon les applications envisagées. En outre, lors de l'installation de la jonction sur des câbles ou de la manipulation ultérieure de ces câbles, des fissures ou des déchirures peuvent survenir entre les différentes couches de la jonction du fait de son caractère monobloc.

Le document WO 02/078145 A1 divulgue une méthode de production industrielle pour des jonctions rétractables à froid et des terminaisons à parois élastiques multiples.

Le document WO 2020/208440 A1 divulgue un cœur de support pour manchon élastique.

Le document FR 2 790 863 A1 divulgue un support de manchon rétractable pour jonction de câble électrique.

Le document EP 0 435 569 A1 divulgue un manchon radialement rétractable pour contenir une connexion ou une borne d'un câble électrique.

Le document EP 3 764 492 A1 divulgue un procédé de fabrication d'une jonction entre les écrans de deux câbles électriques et une jonction correspondante.

Le document WO 97/32381 A1 divulgue un ensemble de fermeture de câble comportant une matière fluide et un cœur de renforcement.

La présente invention a pour but de remédier aux inconvénients précités de l'art antérieur.

Dans ce but, la présente invention propose un procédé de fabrication d'une jonction entre deux câbles électriques de puissance, remarquable en ce qu'il comporte des étapes d'assemblage sans moulage consistant à :
expanser une électrode sur deux tubes support amovibles ;
appliquer sur cette électrode au moins une couche de substance fluide présentant des propriétés électriques ;
disposer un manchon rétractable autour de l'électrode et de l'au moins une couche de substance fluide.

Ainsi, en raison de l'expansion des différents composants de la jonction indépendamment les uns des autres et du fait de l'assemblage sans moulage, un à un, de ces différents composants, il devient possible d'adapter les longueurs de ces composants aux contraintes des câbles destinataires de la jonction et de modifier le type de substance fluide en fonction de l'application considérée (par exemple basse, moyenne ou haute tension). On obtient donc une jonction polyvalente, qui peut être déclinée suivant une gamme complète.

Par ailleurs, cet assemblage sans moulage permet d'éviter fissures ou déchirures entre les différentes couches de la jonction.

En outre, grâce à la substance fluide déjà présente dans la jonction, il n'est pas nécessaire de prévoir de graisser les câbles avant la pose de la jonction.

Dans un mode particulier de réalisation, l'électrode est rétractable à froid.

Dans un mode particulier de réalisation, les deux tubes sont en polycarbonate. Cela permet d'augmenter la résistance de la jonction à un stockage à température ou pression élevée. Par exemple, les tubes peuvent ainsi supporter des efforts de pression de plus de 1 daN/cm² exercés par le manchon rétractable et ce, dans des conditions de stockage comprises entre -20°C et +80°C.

Dans un mode particulier de réalisation, les deux tubes sont cylindriques. Cette forme est avantageuse pour obtenir une bonne stabilité mécanique de la jonction.

Dans un mode particulier de réalisation, le manchon rétractable est en EPDM (Ethylène-Propylène-Diène Monomère). Cette matière est avantageuse car elle offre au manchon rétractable des propriétés d'allongement ainsi que la faculté de reprendre sa forme initiale après retrait des tubes support amovibles, lors de l'installation de la jonction sur des câbles. Cette matière présente en outre des caractéristiques électriques avantageuses, telles qu'un fort pouvoir d'isolation électrique et de maitrise des champs électriques.

En variante, le manchon rétractable peut être en silicone. Cette matière est avantageuse en ce qu'elle présente une excellente tenue à haute température.

Dans le même but que celui indiqué plus haut, la présente invention propose également une jonction de câble électrique de puissance, remarquable en ce qu'elle est constituée d'un assemblage sans moulage comportant une électrode, au moins une couche de substance fluide présentant des propriétés électriques et un manchon rétractable, cet assemblage sans moulage étant réalisé par un procédé tel que succinctement décrit ci-dessus.

Dans le même but que celui indiqué plus haut, la présente invention propose en outre un câble électrique de puissance comportant au moins deux segments de câble, remarquable en ce qu'au moins deux des au moins deux segments de câble sont reliés entre eux par une jonction de câble de puissance telle que succinctement décrite ci-dessus.

Les caractéristiques particulières et les avantages de la jonction et du câble étant similaires à ceux du procédé de fabrication, ils ne sont pas répétés ici.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est un organigramme illustrant les principales étapes d'un procédé de fabrication d'une jonction de câble électrique de puissance conforme à la présente invention, dans un mode particulier de réalisation.
[Fig. 2] est une vue schématique des divers composants d'une jonction mis en place lors d'une série d'étapes comprises dans le procédé de fabrication conforme à la présente invention, dans un mode particulier de réalisation.

### Description de mode(s) de réalisation

Le procédé de fabrication d'une jonction de câble électrique conforme à la présente invention a pour originalité de consister en un assemblage sans moulage des différents composants de la jonction. En particulier, les composants à expanser sont expansés indépendamment les uns des autres.

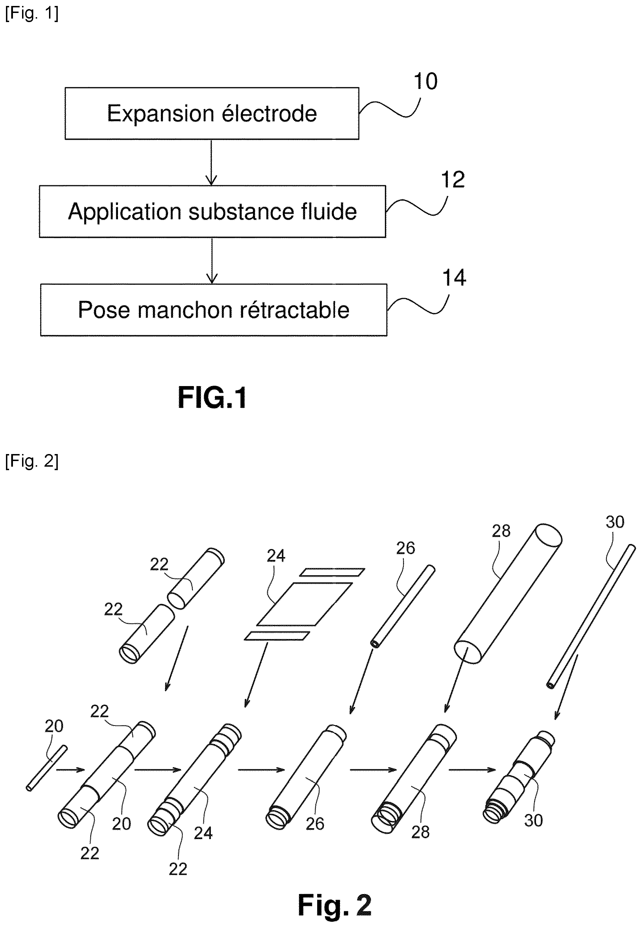

Comme le montrent les figures 1 et 2, dans un mode particulier de réalisation, une première étape 10 du procédé consiste à expanser une électrode 20 sur deux tubes support 22 amovibles. De façon connue en soi, ces tubes support 22 serviront à installer la jonction sur le ou les câbles destinataires puis seront ôtés une fois l'installation de la jonction terminée.

Avantageusement mais non nécessairement, les deux tubes 22 peuvent être réalisés à partir de polycarbonate. Ils peuvent comporter du polycarbonate et d'autres constituants, ou bien être entièrement constitués de polycarbonate.

Avantageusement, l'électrode 20 est rétractable à froid.

Les deux tubes 22 peuvent être de forme cylindrique. Cette forme est avantageuse dans le cas où le ou les câbles sur lesquels la jonction est destinée à être installée sont de section cylindrique. Néanmoins, les tubes 22 pourraient avoir toute autre forme jugée appropriée, comme par exemple une forme aplatie ou une section rectangulaire ou carrée, ces exemples étant donnés à titre non limitatif.

Une étape suivante 12 du procédé de fabrication consiste à appliquer sur l'électrode 20 expansée une ou plusieurs couches d'une substance fluide 24 présentant des propriétés électriques.

A titre d'exemple non limitatif, la substance fluide 24 peut comporter un ou plusieurs types de mastic, résine ou gel ou toute autre matière fluide ayant des propriétés électriques adaptées.

Afin de confiner la substance fluide 24 dans la ou les régions souhaitées, on peut prévoir un dispositif de retenue (non représenté) tel qu'un ou plusieurs anneaux placés autour de l'électrode. Quel que soit le nombre total d'anneaux, deux anneaux successifs sont agencés à une distance non nulle prédéterminée l'un de l'autre, cette distance étant fonction de la quantité de substance fluide prévue entre les deux anneaux considérés et de l'épaisseur souhaitée pour la couche de substance fluide. De façon plus générale, les anneaux sont dimensionnés de façon à confiner la substance fluide.

Puis une étape 14 consiste à disposer un manchon 26 rétractable, appelé aussi corps de jonction, autour de l'électrode 20 et de la couche ou des couches de substance fluide 24.

Le manchon 26 est par exemple thermorétractable ou rétractable par pression et est initialement dans un état dilaté. Il sera dans un état rétracté une fois l'installation achevée.

Avantageusement mais non nécessairement, le manchon 26 peut être réalisé à partir d'EPDM (Ethylène-Propylène-Diène Monomère). Il peut comporter de l'EPDM et d'autres constituants, ou bien être entièrement constitué d'EPDM.

En variante, le manchon 26 peut être réalisé à partir de silicone. Il peut comporter du silicone et d'autres constituants, ou bien être entièrement constitué de silicone.

De même que le manchon 26, les anneaux peuvent être réalisés à partir d'EPDM ou de silicone. La matière pourra être modifiée suivant l'application concernée et selon les efforts à supporter.

A la suite de l'étape 14 de mise en place du manchon 26, des étapes classiques de finalisation de la jonction sont effectuées, telles que la mise en place d'une chaussette ou tresse métallique 28, puis d'une couverture 30 sur la jonction. Une fois l'ensemble des éléments de la jonction ainsi assemblés et la jonction installée sur le ou les câbles destinataires, on retire les tubes support 22.

La jonction obtenue par le procédé de fabrication décrit précédemment peut être installée entre deux câbles électriques de puissance pour les connecter électriquement entre eux. De même, elle peut être installée entre deux segments de câble d'un même câble électrique de puissance.

Avantageusement, ce ou ces câbles sont à moyenne tension ou à haute tension. Ces exemples de câbles ne sont pas limitatifs. L'invention peut s'appliquer à d'autres types de câbles, comme par exemple des câbles à basse tension.

L'électrode 20 rétractable et le manchon 26 rétractable permettent à la jonction d'épouser la forme du raccordement entre les câbles ou segments de câbles considérés. Grâce aux propriétés élastiques de la jonction combinées au choix des longueurs pour les différents composants de la jonction, des câbles de sections très diverses et fonctionnant dans des gammes très diverses de tensions peuvent être connectés.

Ainsi, un câble électrique de puissance conforme à la présente invention comporte au moins deux segments de câble. Ces deux segments (ou deux segments successifs de câble, si le câble comporte plus de deux segments) sont assemblés mécaniquement par un connecteur mécanique.

On pourrait tout aussi bien considérer que le connecteur mécanique relie mécaniquement entre eux, non pas deux segments d'un même câble, mais deux câbles électriques.

La jonction est disposée autour du connecteur mécanique et d'au moins une partie des deux segments, cette partie contenant au moins les extrémités des segments assemblées par le connecteur mécanique.

## Revendications

1. Procédé de fabrication d'une jonction entre deux câbles électriques de puissance, procédé comportant des étapes d'assemblage sans moulage consistant à :
expanser (10) une électrode (20) sur deux tubes support (22) amovibles ;
appliquer (12) sur ladite électrode (20) au moins une couche de substance fluide (24) présentant des propriétés électriques ;
disposer (14) un manchon (26) rétractable autour de ladite électrode (20) et de ladite au moins une couche de substance fluide (24).

2. Procédé selon la revendication 1, **caractérisé en ce que** ladite électrode (20) est rétractable à froid.

3. Procédé selon la revendication 1 ou 2, **caractérisé en ce que** lesdits deux tubes (22) sont en polycarbonate.

4. Procédé selon la revendication 1, 2 ou 3, **caractérisé en ce que** lesdits deux tubes (22) sont cylindriques.

5. Procédé selon l'une quelconque des revendications précédentes, **caractérisé en ce que** ledit manchon (26) rétractable est en EPDM.

6. Procédé selon l'une quelconque des revendications 1 à 4, **caractérisé en ce que** ledit manchon (26) rétractable est en silicone.

7. Jonction de câble électrique de puissance, constituée d'un assemblage sans moulage comportant une électrode (20), au moins une couche de substance fluide (24) présentant des propriétés électriques et un manchon (26) rétractable, ledit assemblage sans moulage étant réalisé par un procédé selon l'une quelconque des revendications précédentes.

8. Câble électrique de puissance comportant au moins deux segments de câble, **caractérisé en ce qu'**au moins deux desdits au moins deux segments de câble sont reliés entre eux par une jonction de câble électrique de puissance selon la revendication 7.

## Patentansprüche

1. Verfahren zur Herstellung einer Verbindung zwischen zwei Leistungskabeln, wobei das Verfahren Montageschritte ohne Formgebung umfasst, die darin bestehen:
eine Elektrode (20) auf zwei abnehmbare Trägerrohre (22) ausdehnen (10);
auf die genannte Elektrode (20) mindestens eine Schicht einer flüssigen Substanz (24) mit elektrischen Eigenschaften auftragen (12);
eine einziehbare Manschette (26) um die genannte Elektrode (20) und die genannte mindestens eine Schicht einer flüssigen Substanz (24) herum anordnen (14).

2. Verfahren nach Anspruch 1, **dadurch gekennzeichnet, dass** die genannte Elektrode (20) kalt einziehbar ist.

3. Verfahren nach Anspruch 1 oder 2, **dadurch gekennzeichnet, dass** die beiden Rohre (22) aus Polycarbonat bestehen.

4. Verfahren nach Anspruch 1, 2 oder 3, **dadurch gekennzeichnet, dass** die beiden Rohre (22) zylindrisch sind.

5. Verfahren nach irgendeinem der vorangehenden Ansprüche, **dadurch gekennzeichnet, dass** die genannte einziehbare Manschette (26) aus EPDM besteht.

6. Verfahren nach irgendeinem der Ansprüche 1 bis 4, **dadurch gekennzeichnet, dass** die genannte einziehbare Manschette (26) aus Silikon besteht.

7. Leistungskabelverbindung, bestehend aus einer Montage ohne Formgebung, die eine Elektrode (20), mindestens eine Schicht der flüssigen Substanz (24) mit elektrischen Eigenschaften und eine einziehbare Manschette (26) aufweist, wobei die genannte Montage ohne Formgebung durch ein Verfahren gemäß einem der vorangehenden Ansprüche hergestellt wird.

8. Leistungskabel, das mindestens zwei Kabelabschnitte aufweist, **dadurch gekennzeichnet, dass** mindestens zwei der genannten Kabelabschnitte durch eine Leistungskabelverbindung gemäß Anspruch 7 miteinander verbunden sind.

## Claims

1. Method for manufacturing a junction between two power cables, the method comprising assembly steps without moulding, consisting of:
expand (10) an electrode (20) onto two removable support tubes (22);
apply (12) at least one layer of fluid substance (24) having electrical properties onto said electrode (20);
place (14) a retractable sleeve (26) around said electrode (20) and around said at least one layer of fluid substance (24).

2. Method according to claim 1, **characterised in that** said electrode (20) is cold-retractable.

3. Method according to claim 1 or 2, **characterised in that** said two tubes (22) are made of polycarbonate.

4. Method according to claim 1, 2 or 3, **characterised in that** said two tubes (22) are cylindrical.

5. Method according to any one of the preceding claims, **characterised in that** said retractable sleeve (26) is made of EPDM.

6. Method according to any one of claims 1 to 4, **characterised in that** said retractable sleeve (26) is made of silicone.

7. Power cable junction, consisting of an assembly without moulding comprising an electrode (20), at least one layer of fluid substance (24) having electrical properties, and a retractable sleeve (26), the said assembly without moulding being carried out by a method according to any one of the preceding claims.

8. Power cable comprising at least two cable segments, **characterised in that** at least two of said cable segments are connected to one another by a power cable junction according to claim 7.
